Europäisches Patentamt

European Patent Office

Office européen des brevets

(19)

(11) Publication number: **0 049 409**
**B1**

(12) **EUROPEAN PATENT SPECIFICATION**

(45) Date of publication of patent specification: **13.06.84**

(51) Int. Cl.³: **E 06 B 7/22, B 60 R 13/06**

(21) Application number: **81107445.9**

(22) Date of filing: **19.09.81**

(54) Channel-shaped sealing and guiding strips.

(30) Priority: **08.10.80 GB 8032392**

(43) Date of publication of application:
**14.04.82 Bulletin 82/15**

(45) Publication of the grant of the patent:
**13.06.84 Bulletin 84/24**

(84) Designated Contracting States:
**DE FR IT**

(56) References cited:
**DE - U - 7 912 815**
**DE - U - 7 935 881**
**FR - E - 93 308**
**GB - A - 1 405 014**
**US - A - 3 333 364**
**US - A - 3 333 381**

(73) Proprietor: **DRAFTEX DEVELOPMENT AG.**
**Schönbühl 3**
**CH-6300 Zug (CH)**

(72) Inventor: **Kruschwitz, Werner**
**Beckersweg 10**
**D-4060 Viersen (DE)**
Inventor: **Ginster, Helmut**
**Greefsallee 60**
**D-4060 Viersen 1 (DE)**

(74) Representative: **Foster, David Martyn et al,**
**Mathisen, Macara & Co. Lyon House Lyon Road**
**Harrow Middlesex HA1 2ET (GB)**

Courier Press, Leamington Spa, England.

## Description

The invention relates to window sealing and guiding channel arrangements. For example, embodiments of the invention may be used as window sealing and guiding channels in motor vehicle bodies.

Such window sealing and guiding channels are known from for example, FR—E—93 308, US—A—3 333 364 and US—A—3 333 381. These show channel-shaped flexible material (plastics or rubber) for embracing, so as to seal and guide, the edge of a window pane. FR—E—93 308 and US—A—3 333 364 additionally show the use of a reinforcing channel-shaped metal insert or "carrier" which is embedded in the channel-shaped flexible material for reinforcing purposes. Additionally, US—A—3 333 364 shows the use of an inner channel-shaped lining of flexible material.

It is also known, for example from GB—A—1 405 014 to join two channel-shaped sealing and guiding arrangements together by means of a mitred joint so as to form a corner of a frame.

In accordance with the invention, an assembly of two window sealing and guiding channel arrangements which are connected together by a mitred joint, each channel arrangement comprising a first, outer, channel made of flexible plastics material and a second, inner, channel fitted inside the first channel and made of flexible material, is characterised in that each inner channel is made of rubber material, the plastics channel being mitre-cut and joined together at the mitred joint by being welded and the rubber channels substantially meeting at the joint but not being actually joined to each other.

In accordance with the invention, the respective properties of plastics and rubber are used to the best advantage. Thus rubber is a very satisfactory material for performing the actual sealing and guiding function. A window sealing and guiding arrangement made entirely of channel-shaped rubber material (with or without a reinforcing metal carrier) is not satisfactory, however for a number of reasons: in particular, it is difficult to form a mitred joint between two portions of rubber channel because this requires vulcanization of the two mating portions of rubber which is relatively complex normally involving the use of expensive moulds. Additionally, the external appearance of rubber is not particularly attractive and it is relatively difficult to colour it. Plastics material, on the other hand, while not so satisfactory for sealing purposes as rubber, can be relatively easily joined to itself, such as by a simple plastics welding operation, at the mitred joint, and, moreover, plastics material can more easily be given an attractive external appearance. In accordance with the invention, therefore, the outer plastics material, channels are easily and effectively joined together at the mitred joint, while the inner, rubber, channels are substantially hidden from sight and can be simply cut through so as to provide two portions meeting at the corner, though actually separate, no actual joining being necessary. Any gap between such rubber channels is not of course a disadvantage because the joined plastics channels supporting them provide a continuous weather seal.

Window channel arrangements embodying the invention will now be described, by way of example only, with reference to the accompanying diagrammatic drawings in which:

Figure 1 is a perspective sectional view of one of the window channel arrangements mounted in a support channel in a vehicle body;

Figure 2 is a cross-sectional view to an enlarged scale, of the window channel arrangement of Figure 1; and

Figures 3 and 4 are perspective views of metal reinforcements or carriers which may be incorporated in the window channel arrangements.

The arrangements now to be more specifically described are for use in motor vehicle body construction, such as for sealing and guiding the movable window glass in a motor vehicle body door.

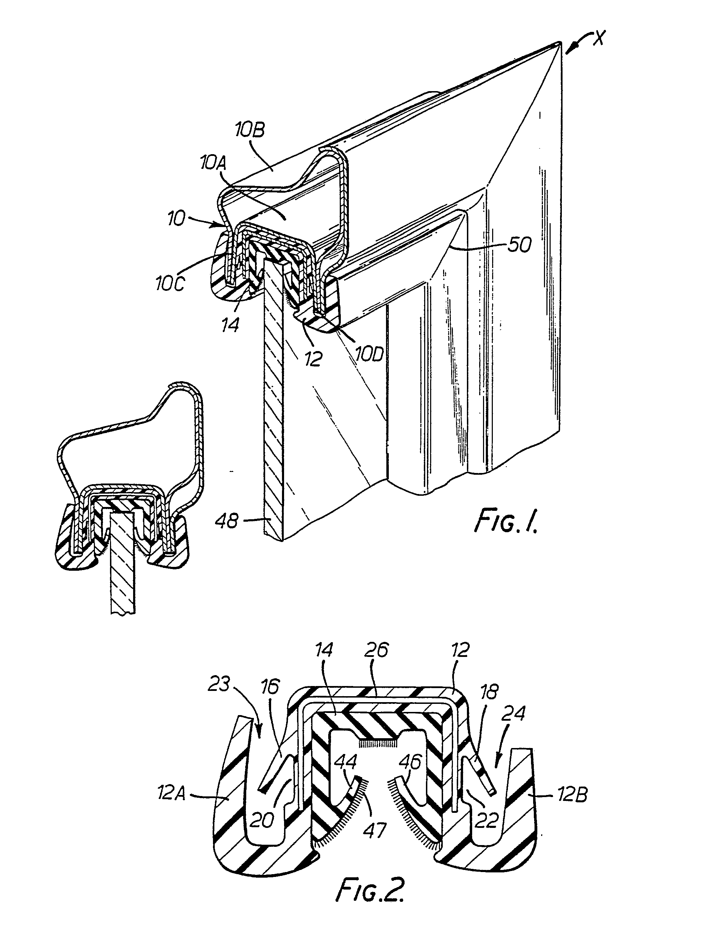

As shown in Figs. 1 and 2, the window channel arrangement is mounted in position in the motor vehicle body door by being inserted in a rigid metal support 10. As shown in Fig. 1, the support 10 comprises inner and outer portions 10A and 10B. The outwardly facing side of the outer portion 10B is covered by a trim strip 10C.

The window channel arrangement has two channel-shaped parts, an outer channel 12 made of plastics material and an inner channel 14 made of rubber material, see Fig. 2 particularly. The plastics channel 12 has gripping lips 16 and 18 running along the outside of the opposite side walls of the channel. Each of these lips is made of plastics material and is integral with the remainder of the channel 12, and is located adjacent a respective longitudinal recess 20, 22.

The regions 12A, 12B of the side walls of the channel 12, adjacent its mouth, are bent back along the outsides of the side walls, so as to provide longitudinally extending slots 23, 24.

The plastics channel 12 contains a metal reinforcing carrier 26. Any suitable form may be used for the metal carrier 26. It may, for example, comprise a series of U-shaped metal reinforcing elements arranged side-by-side to define a channel and connected together by flexible connecting links, or possibly not connected to each other. Instead, however, the metal carrier 26 could be made of wire looped back and forth across the carrier. The general purpose of the carrier is to provide stiffening and reinforcement for the plastics channel 12 and to enable it to be more securely held within the metal support 10. However, other purposes of the metal carrier will be discussed below.

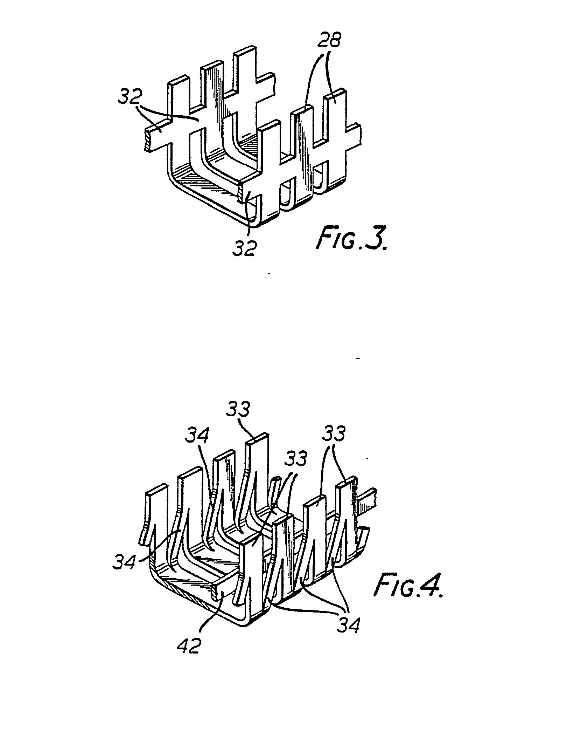

Figure 3 shows one particular form which the carrier 10 can take. As shown, the carrier here comprises a series of transverse U-shaped elements 28 which are joined together by connecting links 32.

Figure 4 shows another form which the metal carrier 10 may take. Here it is shown as comprising a series of U-shaped elements 33 which are connected together by connecting links 34 which are inclined to the longitudinal axis of the carrier. In addition, a flexible tape or thread 42 may run along the length of the carrier.

As shown in Figures 1 and 2, the metal carrier 10 is completely embedded within the plastics material of the plastics channel 12, and this embedding process will also embed the plastics tape 42 in the case of the carrier shown in Figure 4. The embedding process may be carried out by extrusion using a cross-head extruder.

The rubber channel 14 is considerable thinner (e.g. 1.5 mm thick) than the plastics channel 12 and does not contain any metal reinforcement.

As shown, it is provided with integral inwardly directed sealing lips 44, 46 running along the length of the channel on the inside facing side walls thereof. The outer surfaces of the lips 44, 46, as well as the inside of the base of the rubber channel 14, are covered with flock 47.

The rubber channel 14 may be held in position inside the plastics channel 12 in any suitable way. For example, it may be adhesively secured therein, either continuously along their mutual lengths or at intervals therealong. Instead, however, the rubber channel could be held in position by being located in an appropriately shaped recess running along the inside of the channel 12.

When the window channel arrangement is fitted in position within the metal support 10, as shown in Figure 1, the side walls 10C and 10D of the inner portion 10A fit into the slots 23, 24 defined by the bent-over outer portions of the walls of the plastic channel, so as to be a snug fit. In addition, the gripping lips 16, 18 provide a tight frictional grip on the insides of the walls 10C, 10D and are partially pressed into the recesses 20, 22 in the outsides of the walls of the plastic channel. In this way, the window channel arrangement is held securely in position.

The rubber channel 14 is thus appropriately positioned for sealing and guiding the window glass 48, and the sealing and guiding lips 44, 46 press against the sides of the window glass to provide an effective seal against draughts and moisture.

The use of the metal carrier 26 within the plastics channel 12 is advantageous because it stiffens the plastics channel and holds it more securely within the metal support 10. In addition, however, it helps to provide dimensional stability for the window channel arrangement in the longitudinal direction. This is particularly so if the metal carrier takes the form shown in either Figure 3 or Figure 4, where the connecting links 32 and 34 effectively prevent shrinkage of the window channel, which might otherwise take place in response to temperature changes and ageing effects. Stretching of the window channel is prevented by the connecting links 32, of the metal carrier of Figure 3, and by the tape 42 in the metal carrier of Figure 4. The metal carrier of Figure 4 does have the advantage, however, that it is possible for it to be compressed slightly, and this may be useful where small adjustments of its length are necessary during the process of fitting it into the support 10.

In practice, vehicle doors for which the window channel arrangement may be constructed may have one or more sharp corners around the window opening, and the window channel arrangement may be pre-formed with a mitred join or joins positioned and shaped to match such a corner or corners, as shown at X in Fig. 1. With such a pre-formed type of construction, it is particularly desirable that the arrangement should be dimensionally stable and accurate so that it correctly fits the window frame and support 10 for which it is designed. The dimensional stability provided by the metal carrier 26 is particularly advantageous here. Furthermore, the form of carrier shown in Figure 4 is advantageous because its limited compressibility allows some dimensional adjustment to suit tolerances.

The use of a dual form of construction, employing both plastics and rubber channels, is advantageous for a number of reasons.

The rubber channel 14 is very simple in design, much simpler than it would be if the whole window channel arrangement were made of rubber, and it can thus be manufactured by an extrusion process employing a very simple die (or a multiple die extruding more than one rubber channel simultaneously).

The use of a plastics outer channel 12 is advantageous because the plastics material can be easily extruded around the metal carrier 26, can be arranged to be coloured if desired for the purposes of improving appearance, and can easily be arranged to carry a trim strip, such as a bright strip of metallised material.

Furthermore, there are advantages where a pre-formed construction is used, as described above, involving one or more mitred corners X, Fig. 1. It is much easier to form such mitred corners in a plastics channel than in a rubber channel, because the plastics channel can be mitre-cut and the two portions joined together by a simple welding operation as at 50 in Fig. 1. If a mitred join is required between two portions of rubber channel, a much more complex vulcanising operation is necessary, normally involving the use of expensive moulds. With the form of window channel arrangement illustrated, it is only necessary to provide a mitre join (at 50, Fig. 1) in the plastics channel 12; at the resultant corner, the rubber channel 14 can be simply cut through, so as to provide two portions meeting at the corner, though actually separate; the gap between such portions is not of course a disadvantage because the joined plastics channel supporting them provides a continuous weather seal.

The metal carrier 26 has the additional advantage that it reduces the possibility, which can occur with an unreinforced window channel, that the window channel becomes distored and displaced by pressure exerted on it from the window glass when the latter is moved into its closed position.

## Claims

1. An assembly of two window sealing and guiding channel arrangements, each channel arrangement comprising a first, outer, channel (12) made of flexible plastics material and a second, inner, channel (14) fitted inside the first channel and made of flexible material, characterised in that the channel arrangements are connected together by a mitred joint, each inner channel (14) is made of rubber material, the plastics channel (12) being mitre-cut and joined together at the mitred joint by being welded and the rubber channels (14) substantially meeting at the joint but not being actually joined to each other.

2. An assembly according to claim 1, characterised in that each outer channel (12) includes a reinforcing carrier (26), such as made of metal.

3. An assembly according to claim 2, characterised in that each carrier (26) is of a type which resists stretching and compression in the longitudinal direction of the outer channel.

4. An assembly according to any preceding claim, characterised in that each inner channel (14) is secured within the respective outer channel (12) by adhesive.

5. An assembly according to any one of claims 1 to 3, characterised in that each inner channel (14) is secured within the respective outer channel (12) by being mechanically locked therein.

6. An assembly according to any preceding claim, characterised in that sealing lips (16, 18) are provided running longitudinally along the outside surface of the side walls of each outer channel (12) for sealingly and frictionally engaging a rigid support (10) in which the assembly is fitted in use.

7. An assembly according to claim 6, characterised in that the said lips (16, 18) run alongside recesses (20, 22) of complementary shape in the outer surfaces of the side walls of each plastics channel (12), so that the lips (16, 18) at least partially enter the recesses (20, 22) when the respective plastics channel (12) is fitted onto the said rigid support (10).

8. An assembly according to claim 6 or 7, characterised in that the side walls of each plastics channel (12) are extended so as to have portions (12A, 12B) curved over and running back along the outside surfaces of the side walls of the plastics channel (12) to define therewith respective longitudinal slots (23, 24) for receiving parts of the said rigid support (10).

9. An assembly according to any preceding claim, characterised in that each rubber channel (14) is provided with sealing and guiding lips (44, 46) running along the length of the facing inside surfaces of its side walls so as to engage the opposite surfaces of a window glass (48) in use.

10. An assembly according to claim 9, in which the surfaces of the lips (44, 46) which engage the window glass (48) in use, and/or the inside surface of the base of each rubber channel (14), are flocked.

## Revendications

1. Réunion de deux ensembles de canaux d'étanchéité et de guidage pour vitre, chaque ensemble de canaux comprenant un premier canal extérieur (12) fait d'une matière plastique souple et un deuxième canal intérieur (14) s'ajustant à l'intérieur du premier canal et fait d'une matière souple, caractérisée en ce que les ensembles de canaux sont liés ensemble par un assemblage à onglet, chaque canal interne (14) est fait d'une matière du type caoutchouc, le canal en matière plastique (12) étant découpé et assemblé à onglet au niveau de l'assemblage à onglet par un soudage, et les canaux de caoutchouc (14) se rencontrant sensiblement au niveau de l'assemblage, mais n'étant pas réellement assemblés l'un à l'autre.

2. Réunion selon la revendication 1, caractérisé en ce que chaque canal extérieur (12) comporte un support de renforcement (26), par exemple fait de métal.

3. Réunion selon la revendication 2, caractérisée en ce que chaque support (26) est d'un type qui résiste à l'étirement et à la compression dans la direction longitudinale du canal extérieur.

4. Réunion selon l'une quelconque des revendications précédentes, caractérisée en ce que chaque canal intérieur (14) est fixé par collage à l'intérieur du canal extérieur (12) respectif.

5. Réunion selon l'une quelconque des revendications 1 à 3, caractérisée en ce que chaque canal intérieur (14) est fixé par blocage mécanique à l'intérieur du canal extérieur (12) respectif.

6. Réunion selon l'une quelconque des revendications précédentes, caractérisée en ce que des rebords d'étanchéité (16, 18) s'étendent longitudinalement suivant la surface externe des parois latérales de chaque extérieur (12) afin de venir en contact d'étanchéité et de frottement avec un support rigide (10) dans lequel la réunion est, en utilisation, ajustée.

7. Réunion selon la revendication 6, caractérisée en ce que lesdits rebords (16, 18) s'étendent suivant le côte d'évidements (20, 22) de forme complémentaire ménagés dans les surfaces extérieures des parois latérales de chaque canal (12) en matière plastique, de sorte que les rebords (16, 18) pénètrent au moins partiellement dans les évidements (20, 22) lorsque le canal de matière plastique respectif (12) est ajusté sur ledit support rigide (10).

8. Réunion selon la revendication 6 ou 7, caractérisée en ce que les parois latérales de chaque canal de matière plastique (12) se prolongent de façon à présenter des parties (12A, 12B), qui s'incurvent et se retournent suivant les longueurs des surfaces extérieures des parois latérales du canal en matière plastique (12) de manière à définir avec celui-ci des fentes longitudinales (23, 24) respectives destinées à recevoir des parties dudit support rigide (10).

9. Réunion selon l'une quelconque des revendications précédentes, caractérisée en ce que chaque canal de caoutchouc (14) est doté de rebords détanchéité et de guidage (44, 46) s'étendant suivant la longueur des surfaces intérieurement orientées de ces parois latérales de façon à venir, en utilisation, en contact avec les surfaces opposées d'une vitre (48).

10. Réunion selon la revendication 9, dans laquelle les surfaces des rebords (44, 46) qui, en utilisation, sont en contact avec la vitre (48) et, ou bien, la surface interne de la base de chaque canal de caoutchouc (14) sont revêtues de bourre.

## Patentansprüche

1. Verbindung von zwei Fensterdichtungs- und -führungskanalanordnungen, bei der jede Kanalanordnung aus einem ersten, äußeren, Kanal (12) aus flexiblem Kunststoffmaterial und einem zweiten, inneren, innerhalb des ersten Kanals (12) eingepaßten Kanal (14) aus einem flexiblen Material besteht, dadurch gekennzeichnet, daß die Kanalanordnung durch einen Stoß auf Gehrung miteinander verbunden sind, jeder innere Kanal (14) aus Gummimaterial hergestellt ist, die äußeren (Kuntstoff) Kanäle (12) auf Gehrung geschnitten und an dem Gehrungsstoß durch Schweißen miteinander verbunden sind und die inneren (Gummi) Kanäle (14) sich im wesentlichen an dem Stoß treffen, aber nicht wirksam miteinander verbunden sind.

2. Verbindung nach Anspruch 1, dadurch gekennzeichnet, daß jeder äußere Kanal (12) einen Verstärkungsträger (26), wie aus Metall, enthält.

3. Verbindung nach Anspruch 2, dadurch gekennzeichnet, daß jeder Verstärkungsträger (26) gegen Dehnungen und Stauchungen in Längsrichtung des äußeren Kanals widersteht.

4. Verbindung nach einem der Ansprüche 1 bis 3, dadurch gekennzeichnet, daß jeder innere Kanal (14) innerhalb des entsprechenden äußeren Kanals (12) durch einen Klebstoff gesichert ist.

5. Verbindung nach einem der Ansprüche 1 bis 3, dadurch gekennzeichnet, daß jeder innere Kanal (14) innerhalb des entsprechenden äußeren Kanals (12) durch mechanischen Verschluß gesichert ist.

6. Verbindung nach einem der Ansprüche 1 bis 5, dadurch gekennzeichnet, daß entlang der Außenfläche der Seitenwände jedes äußeren Kanals (12) verlaufende Dichtungslippen (16, 18) vorgesehen sind und mit einer festen Stütze (10), in die die Verbindung im Gebrauch eingepaßt, ist, durch Reibung in Eingriff stehen.

7. Verbindung nach Anspruch 6, dadurch gekennzeichnet, daß die Dichtungslippen (16, 18) entlang von komplementär ausgebildeten Aussparungen (20, 22) in der Außenfläche der Seitenwände jedes äußeren Kanals (12) derart verlaufen, daß sie zumindest teilweise in die Aussparungen (20, 22) eintauchen, wenn der betreffende äußere Kanal (12) auf der festen Stütze (10) aufgesetzt ist.

8. Verbindung nach Anspruch 6 oder 7, dadurch gekennzeichnet, daß die Seitenwände jedes äußeren Kanals (12) Bereiche (12A, 12B) aufweisen, die umgebogen sind und entlang den Außenflächen der Seitenwände des äußeren Kanals (12) derart zurückverlaufen, daß sie damit entsprechende längsgestreckte Aufnahmeschlitze (23, 24) für Teile der festen Stütze (10) bilden.

9. Verbindung nach einem der Ansprüche 1 bis 8, dadurch gekennzeichnet, daß jeder innere Kanal (14) mit der Länge der nach innen gerichteten Oberflächen seiner Seitenwände nach verlaufenden Dichtungs- und Führungslippen (44, 46) derart versehen ist, daß sie im Gebrauch die einander gegenüberliegenden Oberflächen eines Fensterglases (48) erfassen.

10. Verbindung nach Anspruch 9, dadurch gekennzeichnet, daß die das Fensterglas (48) im Gebrauch erfassenden Oberflächen der Lippen (44, 46) und/oder Innenseite der Basis jedes inneren Kanals (14) beflockt sind.

FIG. I.

FIG. 2.

FIG.3.

FIG.4.